# EUROPEAN PATENT SPECIFICATION

(11) **EP 3 001 013 B1**
(45) Date of publication and mention of the grant of the patent: **12.07.2017**
(21) Application number: 15185792.7
(22) Date of filing: 18.09.2015
(51) Int. Cl.: F02C 3/14, F01D 25/30

(54) **PROCESS TO PREPARE A HEATED GAS AND GENERATE ELECTRICITY**
VERFAHREN ZUR HERSTELLUNG EINES ERWÄRMTEN GASES UND ZUR ERZEUGUNG VON ELEKTRIZITÄT
PROCÉDÉ POUR PRÉPARER UN GAZ CHAUFFÉ ET GÉNÉRER DE L'ÉLECTRICITÉ

(30) Priority: 26.09.2014 NL 2013537
(43) Date of publication of application: 30.03.2016
(73) Proprietor: Innecs B.V., 2461 EB Ter Aar (NL)
(72) Inventor: SCHIMMEL, Hendrikus Gijsbertus, 3544 VP Utrecht (NL); VERSLUIS, Michel, 2406 EE Alphen aan den Rijn (NL); van der MEER, Pieter Laurens, 2353 RS Leiderdorp (NL)
(74) Representative: Cramwinckel, Michiel

(56) References cited:
- US-A- 3 118 278
- US-A- 3 831 374
- US-A1- 2004 011 041
- US-A1- 2012 297 793
- US-A1- 2014 260 325

## Description

The invention is directed to a process to prepare a heated gas and generate electricity using an apparatus for expanding a compressed combustion gas comprising a combustor, an axial turbine rotor and a diffusor.

Numerous processes are known for generating electricity by expanding compressed combustion gas as in gas turbines to drive a turbine rotor. The turbine rotor will be fixed to a shaft and the rotational energy as generated by the rotating turbine rotor and shaft is usually converted to electricity by making use of a generator also fixed to the shaft. Such processes are typically optimised to expand a compressed combustion gas having a high pressure ratio. In certain applications it may be desirable to apply a lower pressure ratio of about 2 to 5, wherein the pressure ratio is the pressure upstream the turbine rotor and the ambient pressure. A problem with the state of the art processes is that the efficiency of recovering rotation energy from the expanding combustion gas by means of the turbine rotor is low.

For small scale gas turbine processes used in industry in non-aviation applications combinations of a centrifugal compressor, annular burners and axial turbine rotors are used. The compressor is used to compress combustion air. A fuel is typically combusted with the compressed air in one or more annular positioned burners. The compressed combustion gas thus obtained is expanded using an axial turbine rotor or rotors and discharged via a diffusor. A disadvantage of such apparatuses is that NOx emissions are typically high. If electricity is required to be produced using the rotational energy produced by the turbine rotor by means of a generator the rotational speed is often too high to directly fix a generator to a common shaft. Gear boxes will be required which makes the device complex and less energy efficient. US2004/0011041 A1 discloses a known process to prepare a heated gas and generate electricity. The object of the present invention is to provide an energy efficient process when operated at these lower pressure ratio's and which does not have one or more of the above described disadvantages.

This object is achieved with the following process. Process to prepare a heated gas and generate electricity using an apparatus for expanding a compressed combustion gas comprising a combustor, an turbine rotor and a diffusor at at a pressure ration of between 2 and 5, wherein
the combustor is comprised of an axially extending space around an axially extending combustor axis provided with one or more burners at one end and an circular slit as discharge opening at its opposite downstream end,
the turbine rotor being an axial turbine rotor, optionally having a radial component, which turbine rotor being rotatable along the combustor axis and provided with an inlet to receive combustion gas fluidly connected to the discharge opening of the combustor and a discharge outlet to discharge combustion gas, wherein the turbine rotor is fixed to a rotatable shaft, which shaft is positioned axial with the combustor axis and wherein
the diffusor is comprised of a circular slit-shaped inlet opening fluidly connected to the discharge outlet of the turbine rotor, a flow path for combustion gas which extends axially away from the combustor and extends radially outward towards a circular slit-shaped outlet, which circular slit-shaped outlet is fluidly connected along its circumference to a receiving space and wherein
a generator and a compressor are directly fixed to the rotatable shaft, wherein the sequence along the shaft is turbine rotor, generator and compressor and wherein the compressor is provided with an outlet for compressed air which is fluidly connected to the combustor via a compressed air flow path and wherein no heat exchanger is present in the compressed air flow path and wherein
the generator is equipped to either generate electric power or deliver a shaft torque to the shaft.

Applicants found that the efficiency of such a process is high when applying a lower pressure ratio. The design of the diffusor allows for that more kinetic energy of the combustion gas as it passes the diffusor is converted to pressure. The apparatus is further advantageous because its design allows for other elements, such as a generator and compressor to be fixed to the shaft and close to the turbine rotor such to result in a practical length of the shaft. Furthermore the apparatus may be operated at rotational speeds allowing for direct coupling of a generator to the shaft. Further advantages will be described in relation with the preferred embodiments described below.

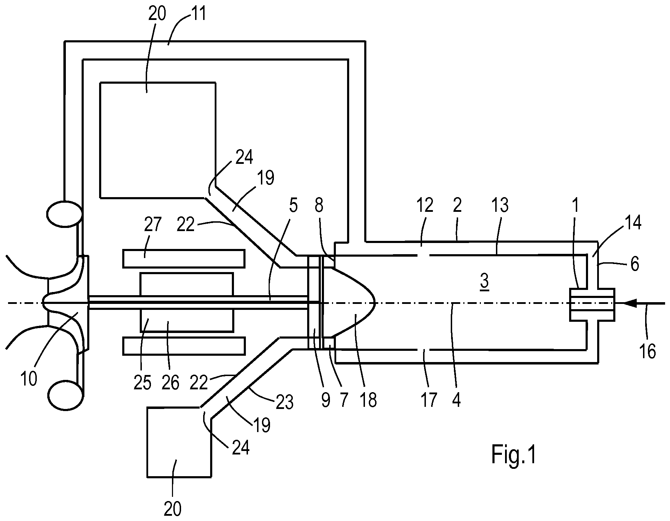

The diffusor is comprised of a circular slit-shaped inlet opening fluidly connected to the discharge outlet of the turbine rotor. By circular opening is meant an annular opening or an opening shaped like or forming a ring as shown in Figure 1. The opening is suitably a single opening and the flow path for combustion gas is suitably present in a single space. The diffusor is comprised of a flow path for combustion gas which extends axially away from the combustor and extends radially outward towards a circular outlet. By circular slit-shaped outlet is meant an annular opening or an opening shaped like or forming a ring. At its upstream part the flow path may be provided with a bend to direct the expanded combustion gas from a substantially axial direction as it is discharged from the turbine rotor to the above described path way which extends both radially and axially. The radius of such a bend should not be too small in order to avoid unnecessary additional pressure drops and not too large in order to avoid a very large apparatus. The inlet area of the bend and thus also of the circular slit-shaped inlet opening of the diffusor is suitably equal or greater than the outlet area of the bend.

Part of the flow path for the combustion gas of the diffusor is suitably defined by two frusto conical walls. This part will thus extend both in a radial and axial direction when viewed in the direction of the gas as its passes the diffusor. These walls may run parallel wherein the distance between the two walls remains constant along the length of the flow path. The distance may also vary, for example increase, along the length of the flow path.

The angle between the general direction of the flow path between the two frusto conical walls and the combustor axis is between 20 and 60°. The angle of the general direction is the numerical average of the angle of the two frusto conical walls with the combustor axis. In case additional elements, such as a generator and compressor are to be fixed to the shaft it is preferred that this angle is greater than 30°, more preferably greater than 40°. The angle is preferably smaller than 50° to achieve higher efficiencies. As is clear from the above description is the fact that the flow of gas as it follows the flow path from the circular inlet of the diffusor to the circular outlet of the diffusor does not reverse direction as viewed along the combustor axis.

Preferably the area ratio between the end and the start of the flow path between the two frusto conical walls is above 1.5, more preferably above 1.8 and preferably below 6 and more preferably below 3. The area is here defined as the cross sectional area of the flow path as present the two frusto conical wall parts and not including the optional bends. Preferably the increase of this area in the direction of the flow path is low enough to avoid that the boundary layer of the gas separates from the wall to form eddies, also referred to as diffusor stall. These eddies will block the flow in the diffusor and are preferably avoided. This increase in area will be dependent of the above described general direction of the flow path, the length of the flow path and the positioning of the two walls relative with respect to each other. The two frusto conical walls may run parallel, divert or convert. The distance between the frusto conical walls may increase in the flow direction, wherein a diffusion angle γ is suitably below 20°, preferably below 10° and even more preferably below 5°. Applicants found good results with an angle close to zero. The angle may also be slightly negative, wherein the two walls converge slightly in the flow direction. The diffusion angle is herein twice the angle of one frusto conical wall with the average direction of the flow path. The length of the part of the flow path between the two frusto conical walls may be limited by the available space. Further the length is determined by the above mentioned area ratio, general direction of the flow path, and the positioning of the two walls relative with respect to each other.

The diffusor is also provided with an circular outlet fluidly connected along its circumference to a receiving space. Preferably the receiving space is designed to direct the axially and radially flowing gas in a single radially moving gas flow. Preferably the receiving space has the design of a so-called volute. In such a volute combustion gas as discharged from the outlet opening of the diffusor will be collected. The volute will have an increasing cross-sectional area in a radial direction such that the velocity of the combustion gas in the volute remains substantially the same while combustion gas is collected along the circular outlet opening. The volute may be in a plane perpendicular to the combustor axis as illustrated in the figures. The receiving space may have one or more outlets, suitably tangentially directed, openings for discharge of the combustion gas to other process apparatuses, such as a boiler or a further burner. The diffusor and collecting space as described above thus results in that the axial outflow or axial outflow component of combustion gas as it is discharged from the turbine rotor is deflected in a radial direction.

The combustor is comprised of an axially extending space around an axially extending combustor axis provided with one or more burners at one end and an circular slit as discharge opening at its opposite downstream end. The axially extending space may have any design, such as regular or irregular shapes. Its cross-sectional area may for example be circular, elliptical or rectangular. The cross-sectional area may increase or decrease along the length of the combustor axis. Suitably the axially extending space of the combustor is a tubular space.

The burner may be centrally positioned when a single burner is present. When multiple burners are present it is preferred to arrange the burners in a somewhat symmetrical manner to assist in the creation of an uniform combustion flow in the combustion space. The direction of the burner, i.e. the direction of the combustion gasses as exiting from the burner, may be along the combustor axis in case a single burner is used. In case multiple burners are present the direction of the burner may be parallel to the combustor axis or under an angle with this axis. The burner or burners are suitably of the so-called can type.

The position of the burner or burners at the end of the combustor allows fast dismounting for service purposes. Further it is found that when a single burner is axially aligned with the turbine rotor and shaft an optimal inflow conditions are created for the turbine rotor.

Suitably at the downstream end of the axially extending space of the combustor a gas diverting body is present positioned along the combustor axis defining a combustor gas pathway between said body and the wall of the axially extending space and terminating at the circular slit at the downstream end of the combustor. Such a gas diverting body, sometimes referred to as a dome, may have a cross-sectional design being or resembling the half of an ellipse, wherein the upper end of the ellipse is positioned closest to the burner on the combustor axis.

The axially extending space of the combustor has a closed end provided with one or more burners, an opposite end provided with a circular slit as discharge opening and optionally a dome and a wall running in the direction of the combustor axis and connecting both said ends. Around the wall of the axially extending space of the combustor a second shell is suitably placed defining a cooling zone between said wall and second shell. The cooling zone is provided with an inlet for compressed air and one or more outlets for compressed air, wherein at least one of these outlets is to provide compressed air to the burner. Suitably more than one outlet for compressed air is provided as openings in the wall of the axially extending space. In case of a tubular space these openings may be arranged in a circle along the circumference of the tubular wall. The inlet for compressed air is suitably positioned such that substantially the entire wall of the axially extending space can be cooled at its exterior by the compressed air. The cooling space may be provided with guiding vanes to create a pathway in the cooling zone which enhances the cooling and converts any radial movement of the compressed air as it is supplied to the cooling space to an axial movement.

Applicants found that the design of combustor and diffusor and collecting space result in a better mixing of fuel and compressed air, a lower NOx emissions, a better stability of the flame and a lower heat load on the wall of the axially extending space. Furthermore because the turbine rotor, the axially extending space and burner are aligned very low loss of energy is obtained of the pressurised combustion gas.

The apparatus is provided with a turbine rotor. This may be a single rotor or a multiple rotor. Preferably a single rotor is used to obtain a more simple design. The rotor itself is an axial turbine rotor. Optionally the rotor may have a radial component. Such a radial component suitably directs the combustion gas towards the direction of the radially and axially extending flow path of the diffusor. The bend as described above could then be omitted.

The turbine rotor is fixed to a rotatable shaft. Suitably a generator and a compressor is further directly fixed to the rotatable shaft. The sequence along the shaft in this preferred embodiment is turbine rotor, generator and compressor. This sequence is advantageous because it results in a very compact apparatus. Furthermore because no gear box is present between shaft and generator a more efficient apparatus is obtained. The compressor is provided with an outlet for compressed air which is fluidly connected to the combustor. The outlet for compressed air is fluidly connected to the combustor via a compressed air flow path and wherein no heat exchanger is present in the compressed air flow path. This is advantageous when the expanded combustion gas as obtained in the collecting space is further used to for example heating purposes.

The generator is configured to also be useable as an electrical motor. The apparatus can then be started-up using the generator as electrical motor. In such a preferred embodiment the generator is equipped to either generate electric power or deliver a shaft torque to the shaft such as for example described in US2002/0070716. Suitably use is made of a converter in combination with such a combined generator-electric motor combination. Such a converter may comprise of a grid-side converter and a generator/motor-side converter. The grid-side converter has two operating modes. In one mode it can transform DC current as generated by the generator into grid alternating current. In another mode it can convert grid alternating current into DC current which is used when the combination is operated as an electrical motor. The grid side converter can perform both conversions. The generator/motor side converter can suitably additionally control the rotational speed of the generator by changing the frequency of the current at the generator/motor side. The generator/motor side converter and grid side converter may also be combined into one apparatus. The generator-motor combination is suitably connected to the electrical grid or any other external source of electricity via the above converter. The generator may comprise of a rotor as fixed to the shaft and equipped with permanent magnetic materials. Around the rotating rotor a stator is positioned with electric spools in which electricity is generated or supplied.

The compressor may be an axial compressor having one or more stages. The compressor is preferably a centrifugal compressor and even more preferably a single centrifugal compressor. Centrifugal compressors are preferred because of their simplicity because they require less stages to obtain the same pressure rise as compared to an axial compressor.

The apparatus and process is especially suited to prepare a heated gas and generate electricity at a low pressure ratio. The pressure ratio is between 2 and 5 and preferably between 3 and 4. The temperature of the heated gas is suitably between 650 and 750°C. The heated gas may find use in many applications. Suitably the heated gas is used to generate steam by indirect heat exchange of water and the heated gas.

Figure 1 shows an apparatus for use in a process according to the present invention. In Figure 1 shows a can-type burner 1 as part of a combustor 2. The combustor 2 is comprised of a tubular combustor space 3 extending axially from the axis 4 of the shaft 5 and provided with the burner 1 at one end 6 and an circular slit 7 as discharge opening at its opposite downstream end 8. At circular slit 7 stator vanes may be present. Through slit 7 the compressed combustion gas flows to the turbine rotor 9. The apparatus is further provided with a single stage centrifugal compressor 10 connected to rotatable shaft 5. In compressor 10 air is compressed to obtain compressed air which compressed air is routed via a compressed air flow path to the burner 1 via conduit 11 to an annular space 12 where the compressed air is used to cool the exterior wall 13 of the tubular combustor space 3 before being fed to the burner 1 via conduit 14. Part of the compressed air is supplied directly to the combustor space 3 via openings 17. Burner 1 is further provided with a fuel supply conduit 16. Combustor space 3 is provided with a dome 18 at end 8.

The compressed combustion gas as present in combustor space 3 is expanded via turbine rotor 9 connected to the rotatable shaft 5 to obtain the heated gas. The heated gas after passing the turbine rotor 9 will flow substantially in an axial direction via a diffusor 19 and volute type collecting space 20. The diffusor 19 will divert the direction of the heated gas flow from a substantial axial flow to a radial flow. The diffusor 19 has a flow path positioned between an inner 22 and outer 23 frusto conical wall. At the end of the flow path a circular outlet 24 is present which fluidly connects along its circumference the flow path to the receiving space 20. In the receiving space 20 the heated gas is collected and redirected to a circular flow and tangentially discharged from said collecting space. As shown the receiving space 20 has the design of a volute having an increasing cross-sectional area along its circumference wherein the tangentially arranged outlet is positioned at the larger cross-sectional part of space 20.

The diffusor 19 as shown in Figure 1 is comprised of one space, meaning that no separation walls are present between the walls 22 and 23 of the diffusor which would create multiple flow paths.

The radially and axially extending diffusor 19 allows the positioning of a generator 25. The generator 25 has a permanent magnet 26 connected to the shaft 5 and a windings 27 in which electricity is generated.

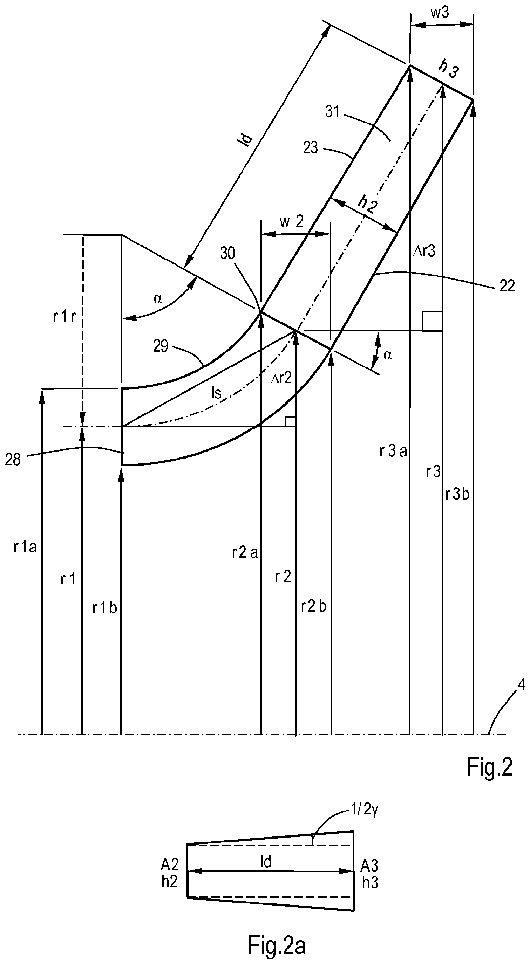

Figure 2 shows a detail of the diffusor 19 of Figure 1. A cross-sectional view of one half of the diffusor 19 is shown. The diffusor 19 is rotatable symmetric with respect to axis 4. Diffusor 19 is provided with a circular slit-shaped inlet opening 28 fluidly connected to the discharge outlet of the turbine rotor. The dimensions of the inlet 28 is defined by radius r1a, r1 and r1b. The first part of the diffusor is comprised of a bend 29 such that the axial direction of the gas as it enters inlet 19 is diverted to a more radial direction. The bend terminates at an outlet 30, wherein the direction of the plane of outlet 30 and the plane of inlet 28 make an angle α. The bend has a radius r1r. The dimensions of the outlet 30 is defined by radius r2a, r2 and r2b. The bend 29 is fluidly connected to a flow path 31 as present between the inner 22 and outer 23 frusto conical wall. The length of the flow path 31 is Id. The width of the flow path is h2 at its upstream end and h3 at its downstream end. In Figure 2 h2 is equal to h3. The width of the flow path 31 may vary along its length as illustrated in Figure 2a, wherein the width h3 at its downstream end is greater, equal or smaller than the width h2 at its upstream end and the distance between the frusto conical walls 22 and 23 increases, stays equal or decreases in the flow direction. Figure 2 also shows the diffusion angle γ being twice the angle of one frusto conical wall with the average direction of the flow path. The area ratio of the flow path 31 between the two frusto conical walls 22 and 23 is suitably between 2 and 3. This is the area of the frusto conical shape defined by radius r2a and r3a for outer wall 23 and the area of the frusto conical shape defined by r2b and r3b for inner wall 22. Also circular outlet 24 is shown which fluidly connects the diffusor 19 with the receiving space 20 of Figure 1. The dimensions of the circular outlet 24 is defined by radius r3a, r3 and r3b.

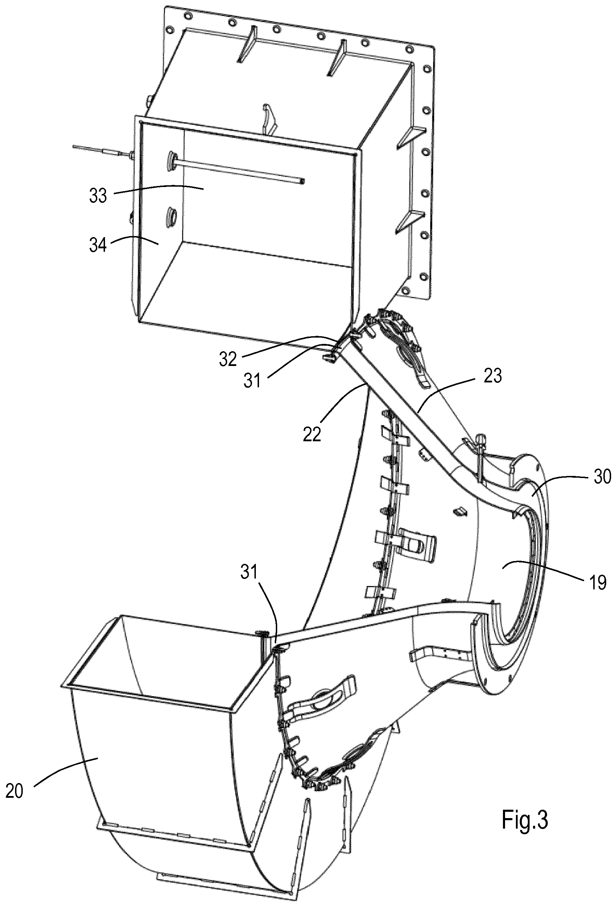

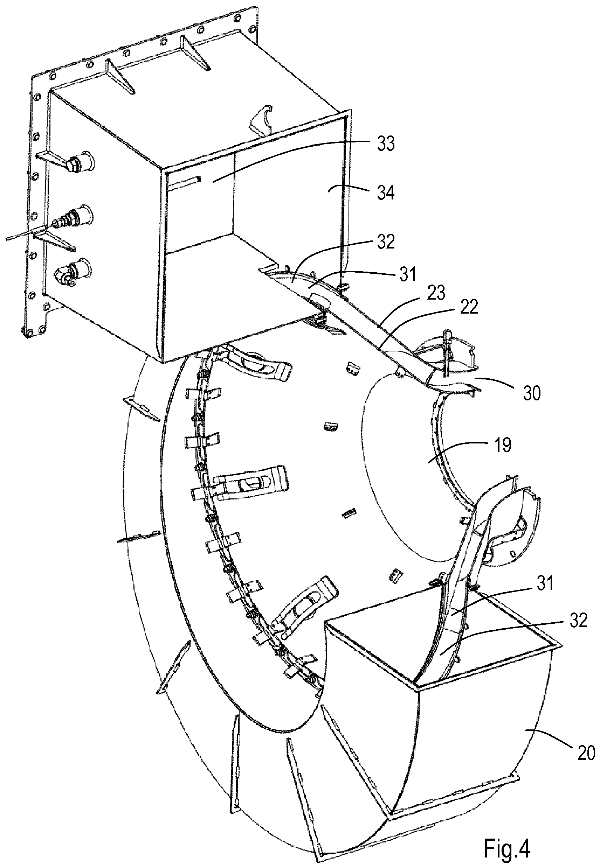

Figure 3 and 4 shows the diffusor 19 of Figure 1 and the and the volute shaped receiving space 20. In these Figures a part of the diffusor 19 and receiving space 20 has been cut out for illustrative reasons. The diffusor 19 has a flow path positioned between an inner 22 and outer 23 frusto conical wall, a circular inlet 30 and a circular outlet 31. As shown the axial direction of the gas as it flows along the flow path in the diffusor does not reverse or make sharp bends. The outlet 31 of the diffusor 19 is fluidly connected to a circular inlet 32 of the volute shaped receiving space 20. The volute shaped receiving space 20 has an increasing cross-sectional area along its circumference wherein the tangentially arranged outlet 33 is positioned at the larger cross-sectional part 34 of receiving space 20.

## Claims

1. Process to prepare a heated gas and generate electricity using an apparatus for expanding a compressed combustion gas comprising a combustor, a turbine rotor and a diffusor at a pressure ratio between 2 and 5, wherein
the combustor is comprised of an axially extending space around an axially extending combustor axis provided with one or more burners at one end and a circular slit as discharge opening at its opposite downstream end,
the turbine rotor being an axial turbine rotor, optionally having a radial component, which turbine rotor being rotatable along the combustor axis and provided with an inlet to receive combustion gas fluidly connected to the discharge opening of the combustor and a discharge outlet to discharge combustion gas, wherein the turbine rotor is fixed to a rotatable shaft, which shaft is positioned axial with the combustor axis and wherein
the diffusor is comprised of a circular slit-shaped inlet opening fluidly connected to the discharge outlet of the turbine rotor, a flow path for combustion gas which extends axially away from the combustor and extends radially outward towards an circular slit-shaped outlet, which circular slit-shaped outlet is fluidly connected along its circumference to a receiving space and wherein
a generator and a compressor are directly fixed to the rotatable shaft, wherein the sequence along the shaft is turbine rotor, generator and compressor and wherein the compressor is provided with an outlet for compressed air which is fluidly connected to the combustor via a compressed air flow path and wherein no heat exchanger is present in the compressed air flow path and wherein
the generator is equipped to either generate electric power or deliver a shaft torque to the shaft.

2. Process according to claim 1, wherein the apparatus is used at a pressure ratio between 3 and 4.

3. Process according to any one of claims 1-2, wherein part of the flow path for the combustion gas of the diffusor is defined by two frusto conical walls.

4. Process according to claim 3, wherein the angle between the general direction of the flow path between the two frusto conical walls and the combustor axis is between 20 and 60°.

5. Process according to any one of claims 3-4, wherein the area ratio between the end and the start of the flow path between the two frusto conical walls is above 1.5 and below 6.

6. Process according to claim 5, wherein the area ratio between the end and the start of the flow path between the two frusto conical walls is above 1.8 and below 3.

7. Process according to any one of claims 1-6, wherein the direction of the flow path between the inlet and the outlet of the diffusor does not reverse in an axial direction.

8. Process according to any one of claims 1-7, wherein the receiving space of the diffusor has the design of a volute, wherein the volute has an increasing cross-sectional area along its circumference and wherein the volute is provided with one or more tangentially directed openings as outlets.

9. Process according to any one of claims 1-8, wherein the axially extending space of the combustor is a tubular space.

10. Process according to any one of claims 1-9, wherein at the downstream end of the axially extending space of the combustor a gas diverting body is present positioned along the combustor axis defining a combustor gas pathway between said body and the wall of the axially extending space and terminating at the circular slit at the downstream end of the combustor.

11. Process according to any one of claims 1-10, wherein around the wall of the axially extending space a second shell is placed defining a cooling zone, wherein the cooling zone is provided with an inlet for compressed air and one or more outlets for compressed air, wherein at least one of these outlets is to provide compressed air to the burner.

12. Process according to claim 11, wherein more than one outlet for compressed air is provided as openings in the wall of the axially extending space.

13. Process according to claim 1-12, wherein the compressor is a single stage centrifugal compressor.

14. Process according to any one of claims 1-13, wherein the temperature of the heated gas is between 650 and 750°C.

15. Process according to claim 14, wherein the heated gas is used to generate steam by indirect heat exchange of water and the heated gas.

## Patentansprüche

1. Verfahren zur Herstellung eines erwärmten Gases und zur Erzeugung von Elektrizität unter Verwendung einer Vorrichtung zur Ausdehnung eines verdichteten Verbrennungsgases, die einen Verbrenner, einen Turbinenrotor und einen Diffusor aufweist, bei einem Druckverhältnis zwischen 2 und 5, wobei der Verbrenner aus einem sich axial erstreckenden Raum um eine sich axial erstreckende Verbrennerachse herum besteht, der an einem Ende mit einem oder mehreren Brennern und an seinem entgegengesetzten stromabwärts gelegenen Ende mit einem kreisförmigen Schlitz als Austrittsöffnung versehen ist,
der Turbinenrotor ein Axialturbinenrotor ist, der optional eine Radialkomponente aufweist, wobei der Turbinenrotor entlang der Verbrennerachse drehbar ist und mit einem Einlass zum Empfangen von Verbrennungsgas, der mit der Austrittsöffnung des Verbrenners fluidisch verbunden ist, und einem Austrittsauslass zum Ablassen von Verbrennungsgas versehen ist, wobei der Turbinenrotor an einer drehbaren Welle befestigt ist, wobei die Welle axial zu der Verbrennerachse angeordnet ist, und wobei der Diffusor aus einer kreisförmigen schlitzförmigen Einlassöffnung besteht, die mit dem Austrittsauslass des Turbinenrotors fluidisch verbunden ist, wobei sich ein Strömungsweg für Verbrennungsgas axial von dem Verbrenner weg erstreckt und sich in Richtung eines kreisförmigen schlitzförmigen Auslasses radial nach außen erstreckt, wobei der kreisförmige schlitzförmige Auslass entlang seines Umfangs mit einem Aufnahmeraum fluidisch verbunden ist, und wobei
ein Generator und ein Kompressor direkt an der drehbaren Welle befestigt sind, wobei die Abfolge entlang der Welle Turbinenrotor, Generator und Kompressor ist, und wobei der Kompressor mit einem Auslass für Druckluft versehen ist, der mit dem Verbrenner über einen Druckluft-Strömungsweg fluidisch verbunden ist, und wobei in dem Druckluft-Strömungsweg kein Wärmetauscher vorhanden ist, und wobei
der Generator entweder dafür ausgerüstet ist, elektrische Energie zu erzeugen, oder der Welle ein Wellendrehmoment bereitzustellen.

2. Verfahren nach Anspruch 1, wobei die Vorrichtung bei einem Druckverhältnis zwischen 3 und 4 verwendet wird.

3. Verfahren nach einem der Ansprüche 1-2, wobei ein Teil des Strömungswegs für das Verbrennungsgas des Diffusors durch zwei kegelstumpfförmige Wände definiert ist.

4. Verfahren nach Anspruch 3, wobei der Winkel zwischen der generellen Richtung des Strömungswegs zwischen den zwei kegelstumpfförmigen Wänden und der Verbrennerachse zwischen 20 und 60° beträgt.

5. Verfahren nach einem der Ansprüche 3-4, wobei das Flächenverhältnis zwischen dem Ende und dem Beginn des Strömungswegs zwischen den zwei kegelstumpfförmigen Wänden über 1,5 und unter 6 ist.

6. Verfahren nach Anspruch 5, wobei das Flächenverhältnis zwischen dem Ende und dem Beginn des Strömungswegs zwischen den zwei kegelstumpfförmigen Wänden über 1,8 und unter 3 ist.

7. Verfahren nach einem der Ansprüche 1-6, wobei sich die Richtung des Strömungswegs zwischen dem Einlass und dem Auslass des Diffusors in einer axialen Richtung nicht umkehrt.

8. Verfahren nach einem der Ansprüche 1-7, wobei der Aufnahmeraum des Diffusors die Gestaltung einer Spirale aufweist, wobei die Spirale entlang ihres Umfangs eine zunehmende Querschnittsfläche aufweist, und wobei die Spirale mit einer oder mehreren tangential ausgerichteten Öffnungen als Auslässe versehen ist.

9. Verfahren nach einem der Ansprüche 1-8, wobei der sich axial erstreckende Raum des Verbrenners ein röhrenförmiger Raum ist.

10. Verfahren nach einem der Ansprüche 1-9, wobei an dem stromabwärts gelegenen Ende des sich axial erstreckenden Raums des Verbrenners ein Gasableitungskörper vorhanden ist, der entlang der Verbrennerachse angeordnet ist, einen Verbrennungsgasweg zwischen dem Körper und der Wand des sich axial erstreckenden Raums definiert und an dem kreisförmigen Schlitz am stromabwärts gelegenen Ende des Verbrenners endet.

11. Verfahren nach einem der Ansprüche 1-10, wobei um die Wand des sich axial erstreckenden Raums herum eine zweite Hülle angeordnet ist, die eine Kühlzone definiert, wobei die Kühlzone mit einem Einlass für Druckluft und einem oder mehreren Auslässen für Druckluft versehen ist, wobei mindestens einer dieser Auslässe dem Brenner Druckluft zuführen soll.

12. Verfahren nach Anspruch 11, wobei mehr als ein Auslass für Druckluft als Öffnungen in der Wand des sich axial erstreckenden Raumes bereitgestellt ist.

13. Verfahren nach Anspruch 1-12, wobei der Kompressor ein einstufiger Zentrifugalkompressor ist.

14. Verfahren nach einem der Ansprüche 1-13, wobei die Temperatur des erwärmten Gases zwischen 650 und 750°C beträgt.

15. Verfahren nach Anspruch 14, wobei das erwärmte Gas verwendet wird, um durch indirekten Wärmeaustausch von Wasser und dem erwärmten Gas Dampf zu erzeugen.

## Revendications

1. Procédé pour préparer un gaz chauffé et générer de l'électricité en utilisant un appareil pour dilater un gaz de combustion comprimé, comprenant une chambre de combustion, un rotor de turbine et un diffuseur à un rapport de pression compris entre 2 et 5, dans lequel
la chambre de combustion est constituée d'un espace s'étendant axialement autour d'un axe de chambre de combustion s'étendant axialement pourvu d'un ou de plusieurs brûleur(s) à une première extrémité et d'une fente circulaire faisant office d'ouverture de décharge à son extrémité aval opposée,
le rotor de turbine étant un rotor de turbine axial, optionnellement comprenant une composante radiale, ledit rotor de turbine étant rotatif le long de l'axe de chambre de combustion et pourvu d'une entrée pour recevoir un gaz de combustion connectée de façon fluidique à l'ouverture de décharge de la chambre de combustion et une sortie de décharge pour décharger le gaz de combustion, dans lequel le rotor de turbine est fixé à un arbre rotatif, ledit arbre étant positionné axialement à l'axe de chambre de combustion, et dans lequel
le diffuseur est constitué d'une ouverture d'entrée en forme de fente circulaire connectée de façon fluidique à la sortie de décharge du rotor de turbine, d'un chemin d'écoulement pour le gaz de combustion qui s'étend axialement à l'écart de la chambre de combustion et qui s'étend radialement vers l'extérieur en direction d'une sortie en forme de fente circulaire, ladite sortie en forme de fente circulaire étant connectée de façon fluidique le long de sa circonférence à un espace de réception, et dans lequel
un générateur et un compresseur sont directement fixés à l'arbre rotatif, dans lequel la séquence le long de l'arbre est le rotor de turbine, le générateur et le compresseur, et dans lequel le compresseur est pourvu d'une sortie pour l'air comprimé qui est connectée de façon fluidique à la chambre de combustion par l'intermédiaire d'un chemin d'écoulement d'air comprimé, et dans lequel aucun échangeur de chaleur n'est présent dans le chemin d'écoulement d'air comprimé, et dans lequel
le générateur est équipé de manière soit à générer de la puissance électrique, soit à délivrer un couple d'arbre à l'arbre.

2. Procédé selon la revendication 1, dans lequel l'appareil est utilisé à un rapport de pression compris entre 3 et 4.

3. Procédé selon l'une quelconque des revendications 1 à 2, dans lequel une partie du chemin d'écoulement pour le gaz de combustion du diffuseur est définie par deux parois tronconiques.

4. Procédé selon la revendication 3, dans lequel l'angle entre la direction générale du chemin d'écoulement entre les deux parois tronconiques et l'axe de chambre de combustion est compris entre 20 et 60°.

5. Procédé selon l'une quelconque des revendications 3 à 4, dans lequel le rapport de surface entre la fin et le début du chemin d'écoulement entre les deux parois tronconiques est supérieur à 1,5 et inférieur à 6.

6. Procédé selon la revendication 5, dans lequel le rapport de surface entre la fin et le début du chemin d'écoulement entre les deux parois tronconiques est supérieur à 1,8 et inférieur à 3.

7. Procédé selon l'une quelconque des revendications 1 à 6, dans lequel la direction du chemin d'écoulement entre l'entrée et la sortie du diffuseur ne s'inverse pas dans une direction axiale.

8. Procédé selon l'une quelconque des revendications 1 à 7, dans lequel l'espace de réception du diffuseur présente la conception d'une volute, dans lequel la volute présente une surface de section transversale croissante le long de sa circonférence, et dans lequel la volute est pourvue d'une ou de plusieurs ouverture(s) orientées de façon tangentielle faisant office de sortie(s).

9. Procédé selon l'une quelconque des revendications 1 à 8, dans lequel l'espace s'étendant axialement de la chambre de combustion est un espace tubulaire.

10. Procédé selon l'une quelconque des revendications 1 à 9, dans lequel, à l'extrémité aval de l'espace s'étendant axialement de la chambre de combustion, un corps de déviation de gaz est prévu et positionné le long de l'axe de chambre de combustion afin de définir un chemin de gaz de chambre de combustion entre ledit corps et la paroi de l'espace s'étendant axialement et qui se termine à la fente circulaire à l'extrémité aval de la chambre de combustion.

11. Procédé selon l'une quelconque des revendications 1 à 10, dans lequel, autour de la paroi de l'espace s'étendant axialement, une seconde coquille est placée pour définir une zone de refroidissement, dans lequel la zone de refroidissement est pourvue d'une entrée pour l'air comprimé et d'une ou de plusieurs sortie(s) pour l'air comprimé, dans lequel au moins une de ces sorties sert à fournir de l'air comprimé au brûleur.

12. Procédé selon la revendication 11, dans lequel plus d'une seule sortie pour l'air comprimé est prévue sous la forme d'ouvertures dans la paroi de l'espace s'étendant axialement.

13. Procédé selon la revendication 1 à 12, dans lequel le compresseur est un compresseur centrifuge à un seul étage.

14. Procédé selon l'une quelconque des revendications 1 à 13, dans lequel la température du gaz chauffé est comprise entre 650°C et 750 °C.

15. Procédé selon la revendication 14, dans lequel le gaz chauffé est utilisé pour générer de la vapeur par un échange de chaleur indirect entre de l'eau et le gaz chauffé.
